# EUROPÄISCHE PATENTANMELDUNG

(11) **EP 3 240 356 A1**
(43) Veröffentlichungstag der Anmeldung: **01.11.2017**
(21) Anmeldenummer: 16167676.2
(22) Anmeldetag: 29.04.2016
(51) Int. Cl.: H04W 84/12, H04L 12/40, H04L 12/46

(54) **REDUNDANT BETREIBBARES INDUSTRIELLES KOMMUNIKATIONSSYSTEM, VERFAHREN ZU DESSEN BETRIEB UND FUNK-TEILNEHMERSTATION**

(71) Anmelder: Siemens Aktiengesellschaft, 80333 München (DE)
(72) Erfinder: Müller, Jörg, 76351 Linkenheim (DE)

(57) **Zusammenfassung**

In einem Funk-Kommunikationssystem für ein industrielles Automatisierungssystem sind zumindest ein erstes und ein zweites Kommunikationsgerät redundant an ein industrielles Kommunikationsnetz angebunden. Das erste und das zweite Kommunikationsgerät sind jeweils über ihren ersten und über ihren Kommunikationsnetzanschluss mittel- oder unmittelbar mit einer jeweiligen ersten und mit einer jeweiligen zweiten Funk-Teilnehmer- bzw. Funk-Basisstation verbunden. Die Funk-Teilnehmerstationen tauschen untereinander Meldungen über verfügbare Funk-Basisstationen aus und koordinieren mittels der Meldungen, welche der Funk-Teilnehmerstationen momentan bzw. innerhalb eines definierbaren Zeitraums eine exklusive Berechtigung für eine Funkverbindung zu einer ausgewählten Funk-Basisstation hat.

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie PROFINET, PROFIBUS oder Real-Time-Ethernet, verwendet.

Äußerst problematisch sind Unterbrechungen von Kommunikationsverbindungen zwischen industriellen Automatisierungsgeräten oder Rechnereinheiten eines industriellen Automatisierungssystems. Neben einem Informationsverlust kann dies beispielsweise zu einer nachteiligen Wiederholung einer Übermittlung von Mess- bzw. Diagnoseergebnissen oder von Dienstanforderungen führen. Hierdurch wird eine zusätzliche Auslastung von Kommunikationsverbindungen des industriellen Automatisierungssystems verursacht, was wiederum zu weiteren Systemstörungen oder -fehlern führen kann.

Darüber hinaus können nicht oder nicht vollständig übermittelte Nachrichten beispielsweise einen Übergang oder Verbleib eines industriellen Automatisierungssystems in einen sicheren Betriebszustand verhindern. Im ungünstigsten Fall kann es zu einem Ausfall einer kompletten Produktionsanlage und zu einem kostspieligen Produktionsstillstand kommen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle zur stoßfreien redundanten Übertragung von Nachrichten in hochverfügbaren industriellen Kommunikationsnetzen entwickelt worden. Hierzu zählen High-availability Seamless Redundancy (HSR) und Parallel Redundancy Protocol (PRP), die im Standard IEC 62439-3 definiert sind und bei Netzstörungen eine umschaltstoßfreie Übertragung von Nachrichten mit äußerst geringen Erholungszeiten ermöglichen. Entsprechend High-availability Seamless Redundancy und Parallel Redundancy Protocol wird jede Nachricht von einem sendenden Kommunikationsgerät dupliziert und auf zwei verschiedenen Wegen zu einem Empfänger geschickt. Durch ein empfängerseitiges Kommunikationsgerät werden Duplikate darstellende redundante Nachrichten aus einem empfangenen Datenstrom ausgefiltert.

Im Standard IEC 62439-3 sind für das Parallel Redundancy Protocol (PRP) aufgrund verhältnismäßig langer Latenzlaufzeiten in Drahtlos-Kommunikationssystemen und eines dadurch bedingten nicht-deterministischen Übertragungsverhaltens bislang ausschließlich kabelgebundene Übertragungsstrecken vorgeschrieben. In "Towards a Reliable Parallel Redundant WLAN Black Channel", Markus Rentschler, Per Laukemann, IEEE 2012 wird eine Eignung von WLAN-Übertragungsstrecken in PRP-Kommunikationsnetzen untersucht. Mittels paralleler Anwendung unterschiedlicher Diversitätstechniken für beispielsweise Raum, Zeit und Frequenz können in WLAN-Kommunikationsnetzen Auswirkungen von stochastischem Kanalschwund hinreichend kompensiert werden.

Aus EP 2 712 124 A1 ist ein redundant betriebenes industrielles Kommunikationssystem mit redundant an ein industrielles Kommunikationsnetz angebundenen Kommunikationsgeräten bekannt, bei dem eine Nachrichtenübermittlung zumindest abschnittsweise kabellos erfolgt. Im industriellen Kommunikationsnetz ist eine Mehrzahl von Puffer-Speichereinheiten für an einem Netzknoten kabelgebunden empfangene und von diesem kabellos zu sendende Nachrichtenelemente vorgesehen. Bei Überschreiten einer maximalen Puffer-Größe wird ein ältestes in der jeweiligen Puffer-Speichereinheit befindliches Nachrichtenelement gelöscht. Bis zu einem Überschreiten der maximalen Puffer-Größe wird das älteste Nachrichtenelement als nächstes kabellos zu sendendes Nachrichtenelement ausgewählt.

In DE 10 2012 209509 A1 ist eine Vorrichtung zur sicheren Datenübertragung zwischen einem mobilen Teilnehmer, der zumindest eine Übertragungsvorrichtung aufweist, und einem stationären Empfänger beschrieben. Dabei kann der mobile Teilnehmer zwischen mehreren Funkzellen wechseln. Jede Funkzelle weist zumindest eine Übertragungsvorrichtung auf, die drahtgebunden an zumindest ein Netzwerk angeschlossen ist. Der stationäre Empfänger ist ebenfalls drahtgebunden an das zumindest eine Netzwerk angeschlossen. Sowohl die drahtlose Übertragung zwischen dem mobilen Teilnehmer und seiner jeweils zugehörigen Übertragungsvorrichtung als auch die drahtgebundene Datenübertragung zwischen der Übertragungsvorrichtung und dem zumindest einen zugehörigen Netzwerk erfolgt redundant. Der stationäre Empfänger ist redundant und drahtgebunden an das Netzwerk angeschlossen.

Zur hochverfügbaren Anbindung von Automatisierungsgeräten mit vollständig unabhängigen Ethernet-Schnittstellen innerhalb eines redundanten Kommunikationsnetzes an einfach angebundene Automatisierungsgeräte wird entsprechend DE 10 2013 211406 A1 für das jeweilige einfach angebundene Automatisierungsgerät ein Y-Switch verwendet. Dabei ist der Y-Switch über einen ersten bzw. zweiten Port mit einem ersten bzw. Teilnetz des redundanten Kommunikationsnetzes verbunden, während er über einen dritten Port mittelbar oder unmittelbar mit dem einfach angebundenen Automatisierungsgerät verbunden ist. Darüber hinaus werden eingehende Datenrahmen am ersten, zweiten bzw. dritten Port einem ersten, zweiten bzw. dritten VLAN zugeordnet. Zusätzlich werden der erste bzw. zweite Port als Untagged Member für das erste und dritte VLAN bzw. für das zweite und dritte VLAN eingerichtet. Der dritte Port wird für alle drei VLANs als Untagged Member eingerichtet. An den ersten beiden Ports gelernte Unicast-MAC-Adressen werden automatisch als statischer Eintrag für das dritte VLAN übernommen. Bei Löschen einer an den ersten beiden Ports gelernten Unicast-MAC-Adresse erfolgt auch ein Löschen des korrespondierenden statischen Eintrags für das dritte VLAN.

Der vorliegenden Erfindung liegt die Aufgabe zugrunde, ein redundant betreibbares industrielles Kommunikationssystem mit Kabellos-Übertragungsstrecken zu schaffen, das eine hohe Zuverlässigkeit aufweist und eine effiziente Funk-Ressourcennutzung ermöglicht, und ein Verfahren zu dessen Betrieb sowie geeignete Systemkomponenten anzugeben.

Diese Aufgabe wird erfindungsgemäß durch ein Kommunikationssystem mit den in Anspruch 1 angegebenen Merkmalen, durch ein Verfahren mit den in Anspruch 10 angegebenen Merkmalen und durch eine Funk-Teilnehmerstation mit den in Anspruch 18 angegebenen Merkmalen gelöst. Vorteilhafte Weiterbildungen der vorliegenden Erfindung sind in den abhängigen Ansprüchen angegeben.

Das erfindungsgemäße Kommunikationssystem umfasst zumindest ein erstes und ein zweites redundant an ein industrielles Kommunikationsnetz angebundenes Kommunikationsgerät mit jeweils zumindest einem ersten und einem zweiten Kommunikationsnetzanschluss. Mit dem ersten und zweiten Kommunikationsnetzanschluss ist eine Signalverarbeitungseinheit verbunden, die eine Multiplexereinheit zur parallelen Weiterleitung zu sendender Datenrahmen an beide Kommunikationsnetzanschlüsse und eine Redundanzbehandlungseinheit zur Verarbeitung von beiden Kommunikationsnetzanschlüssen empfangener Datenrahmen aufweist. Dabei umfasst die Redundanzbehandlungseinheit eine Filtereinheit, die für eine Detektion empfangener redundanter Datenrahmen ausgestaltet und eingerichtet ist, insbesondere durch entsprechende Konfiguration.

Erfindungsgemäß ist das erste Kommunikationsgerät über seinen ersten und über seinen zweiten Kommunikationsnetzanschluss mittel- oder unmittelbar jeweils mit einer Funk-Teilnehmerstation verbunden. Analog dazu ist das zweite Kommunikationsgerät über seinen ersten und über seinen zweiten Kommunikationsnetzanschluss mittel- oder unmittelbar jeweils mit einer Funk-Basisstation verbunden. Eine mittelbare Verbindung kann beispielsweise mittels eines Switches erfolgen, an den das jeweilige Kommunikationsgerät und die jeweiligen Funk-Teilnehmer- bzw. Funk-Basisstationen angeschlossen sind. Die Funk-Teilnehmer- bzw. Funk-Basisstationen können beispielsweise einem Wireless Local Area Network, einem WiMAX-, einem UMTS-, einem LTE-Mobilfunknetz oder einem sonstigen Mobilfunknetz zugeordnet sein. Die Funk-Teilnehmerstationen sind dafür ausgestaltet und eingerichtet, insbesondere konfiguriert, dass sie untereinander Meldungen über verfügbare Funk-Basisstationen austauschen. Darüber hinaus sind die Funk-Teilnehmerstationen dafür ausgestaltet und eingerichtet, dass mittels der Meldungen koordiniert wird, welche der Funk-Teilnehmerstationen momentan bzw. innerhalb eines definierbaren Zeitraums eine exklusive Berechtigung für eine Funkverbindung zu einer ausgewählten Funk-Basisstation hat.

Das erfindungsgemäße Kommunikationssystem bietet als Vorteil, dass durch einen Meldungsaustausch zwischen den beiden Funk-Teilnehmerstationen sichergestellt ist, dass sich die beiden Funk-Teilnehmerstationen insbesondere bei Roaming-Vorgängen nicht gleichzeitig mit derselben Funk-Basisstation verbinden. Vorzugsweise sind die Funk-Teilnehmerstationen dafür ausgestaltet und eingerichtet, dass in den Meldungen jeweils eine temporäre exklusive Zuordnung einer Funk-Basisstation zu einer Funk-Teilnehmerstation angegeben wird. Dies gewährleistet eine besonders zuverlässige Zuordnung zwischen Funk-Teilnehmerstationen und Funk-Basisstationen. Darüber hinaus können die Funk-Teilnehmerstationen dafür ausgestaltet und eingerichtet sein, dass mittels der Meldungen bei einem Abbau oder einer ausbleibenden Nutzung einer Funkverbindung zu einer ausgewählten Funk-Basisstation eine Freigabe einer zuvor genutzten Funkverbindung zur ausgewählten Funk-Basisstation erfolgt. Auf diese Weise kann effiziente Funk-Ressourcennutzung erzielt werden.

Entsprechend einer vorteilhaften Ausgestaltung der vorliegenden Erfindung sind zueinander redundante Datenrahmen durch eine einheitliche Sequenznummer gekennzeichnet. Dabei sind die Signalverarbeitungseinheiten des ersten und des zweiten Kommunikationsgeräts für eine Vergabe einer Sequenznummer an einen redundant zu übermittelnden Datenrahmen ausgestaltet und eingerichtet. Vorzugsweise sind die Funk-Teilnehmerstationen dafür ausgestaltet und eingerichtet, dass bei einem erfolgreichen Empfang eines über ein Funknetz gesendeten Datenrahmens empfängerseitig eine Bestätigungsmeldung an eine senderseitige Funk-Teilnehmerstation übermittelt wird. Des weiteren sind die Funk-Teilnehmerstationen bevorzugt dafür ausgestaltet und eingerichtet, dass ein Senden eines redundanten Datenrahmens mit einer Sequenznummer, die einer senderseitig empfangenen Bestätigungsmeldung zugeordnet ist, unterbunden wird. Ist ein Datenrahmen beispielsweise bereits über eine schnellere Funkverbindung übertragen worden, braucht ein zu diesem redundanter Datenrahmen nicht mehr verzögert bzw. über eine langsamere Funkverbindung übertragen zu werden, sondern kann senderseitig verworfen werden. Dies ermöglicht eine effizientere Ressourcenausnutzung.

Vorzugsweise erfolgt eine Übertragung redundant zu übermittelnder Datenrahmen entsprechend Parallel Redundancy Protocol. Dabei können das erste und zweite Kommunikationsgerät beispielsweise eine PRP-Redbox sein. Über eine solche PRP-Redbox kann jeweils ein einfach angebundenes Kommunikationsgerät mit dem industriellen Kommunikationsnetz verbunden sein.

Entsprechend einer weiteren Ausgestaltung des erfindungsgemäßen Funk-Kommunikationssystems sind zumindest ein erstes und ein zweites dem industriellen Kommunikationsnetz zugeordnetes Netzinfrastrukturgerät mit jeweils einer Mehrzahl von Kommunikationsnetzanschlüssen und einem die Kommunikationsnetzanschlüsse miteinander verbindenden Koppelelement vorgesehen. Die Netzinfrastrukturgeräte können beispielsweise Switches sein. Vorzugsweise ist das Koppelelement eines Netzinfrastrukturgeräts ein Hochgeschwindigkeitsbus bzw. ein Backplane Switch mit zugeordnetem Controller. Das erste Kommunikationsgerät ist über seinen ersten und zweiten Kommunikationsnetzanschluss redundant an das erste Netzinfrastrukturgerät angeschlossen, während das zweite Kommunikationsgerät über seinen ersten und zweiten Kommunikationsnetzanschluss redundant an das zweite Netzinfrastrukturgerät angeschlossen ist.

Außerdem sind das erste und zweite Kommunikationsgerät bzw. das erste und zweite Netzinfrastrukturgerät entsprechend der weiteren Ausgestaltung des erfindungsgemäßen Funk-Kommunikationssystems dafür ausgestaltet und eingerichtet, dass vom ersten Kommunikationsnetzanschluss des ersten und des zweiten Kommunikationsgeräts an das jeweilige Netzinfrastrukturgerät übermittelte Datenrahmen einem ersten virtuellen lokalen Netz zugeordnet werden und dass vom zweiten Kommunikationsnetzanschluss des ersten und des zweiten Kommunikationsgeräts an das jeweilige Netzinfrastrukturgerät übermittelte Datenrahmen einem zweiten virtuellen lokalen Netz zugeordnet werden. Während die Funk-Teilnehmerstationen an das erste Netzinfrastrukturgerät angeschlossen sind, sind die Funk-Basisstationen an das zweite Netzinfrastrukturgerät angeschlossen. Darüber hinaus sind die Funk-Teilnehmerstationen dafür ausgestaltet und eingerichtet, dass dem ersten virtuellen lokalen Netz zugeordnete Datenrahmen mittels der ersten Funk-Teilnehmerstation über ein erstes Funknetz gesendet werden und dass dem zweiten virtuellen lokalen Netz zugeordnete Datenrahmen mittels der zweiten Funk-Teilnehmerstation über ein zweites Funknetz gesendet werden. Das erste und zweite Funknetz können mittels einer Funknetz-Kennung identifizierbar sein, beispielsweise mittels eines Service Set Identifier.

Entsprechend dem erfindungsgemäßen Verfahren zum redundanten Betrieb eines industriellen Kommunikationssystems werden zumindest ein erstes und ein zweites Kommunikationsgerät redundant an ein industrielles Kommunikationsnetz angebunden. Dabei weisen das erste und zweite Kommunikationsgerät jeweils zumindest einen ersten und einem zweiten Kommunikationsnetzanschluss und eine mit dem ersten und zweiten Kommunikationsnetzanschluss verbundene Signalverarbeitungseinheit auf. Die Signalverarbeitungseinheit leitet zu sendende Datenrahmen parallel an beide Kommunikationsnetzanschlüsse weiter und detektiert von beiden Kommunikationsnetzanschlüssen empfangene redundante Datenrahmen.

Erfindungsgemäß ist das erste Kommunikationsgerät über seinen ersten und über seinen zweiten Kommunikationsnetzanschluss mittel- oder unmittelbar jeweils mit einer Funk-Teilnehmerstation verbunden. In entsprechender Weise ist das zweite Kommunikationsgerät über seinen ersten und über seinen zweiten Kommunikationsnetzanschluss mittel- oder unmittelbar jeweils mit einer Funk-Basisstation verbunden. Die Funk-Teilnehmerstationen tauschen untereinander Meldungen über verfügbare Funk-Basisstationen aus. Darüber hinaus koordinieren die Funk-Teilnehmerstationen mittels der Meldungen, welche der Funk-Teilnehmerstationen momentan bzw. innerhalb eines definierbaren Zeitraums eine exklusive Berechtigung für eine Funkverbindung zu einer ausgewählten Funk-Basisstation hat. Vorteilhafterweise vermeiden die Funk-Teilnehmerstationen mittels der Meldungen, dass sich mehrere dem ersten Kommunikationsgerät zugeordnete Funk-Teilnehmerstationen während eines Roaming-Vorgangs gleichzeitig mit derselben Funk-Basisstation verbinden.

Die vorliegende Erfindung wird nachfolgend an einem Ausführungsbeispiel anhand der Zeichnung näher erläutert. Es zeigt
- Figur 1: eine schematische Darstellung eines redundanten industriellen Kommunikationssystems mit zwei PRP-Redboxen, die über WLAN-Übertragungsstrecken miteinander verbunden sind,
- Figur 2: eine Detaildarstellung eines ersten Teils des Kommunikationssystems gemäß Figur 1 mit einer ersten PRP-Redbox, einem ersten VLAN-fähigen Switch und mehreren an den ersten Switch angeschlossenen WLAN-Teilnehmerstationen,
- Figur 3: eine Detaildarstellung eines zweiten Teils des Kommunikationssystems gemäß Figur 1 mit einer zweiten PRP-Redbox, einem zweiten VLAN-fähigen Switch und mehreren an den zweiten Switch angeschlossenen WLAN-Basisstationen.

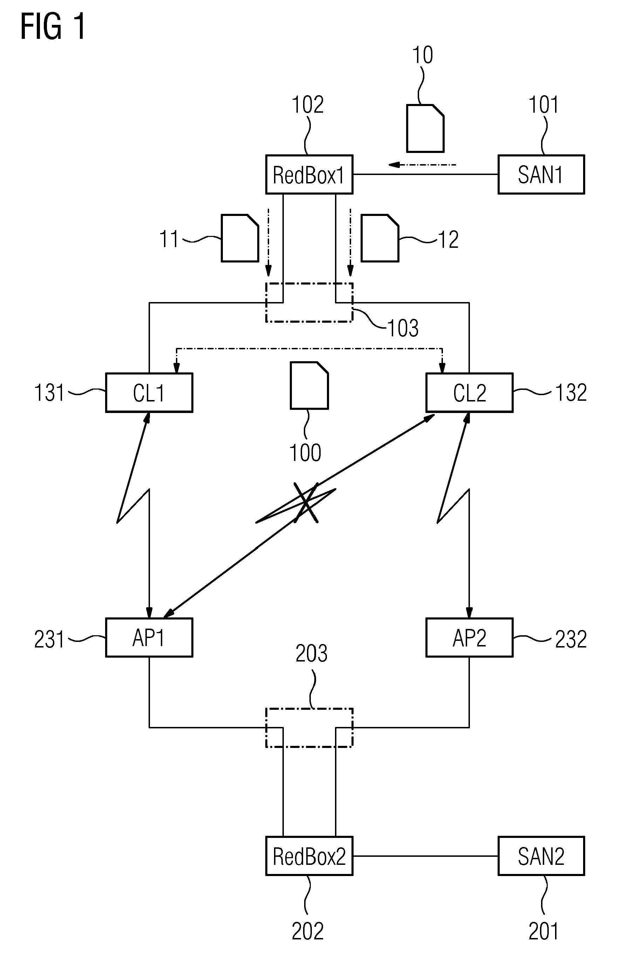

Das in Figur 1 dargestellte industrielle Kommunkationssystem umfasst eine erste 102 und eine zweite PRP-Redbox 202, die jeweils zumindest 3 Kommunikationsnetzanschlüsse aufweisen. Die erste PRP-Redbox 102 ist im vorliegenden Ausführungsbeispiel über ihren ersten und über ihren zweiten Kommunikationsnetzanschluss mittelbar jeweils mit einer WLAN-Teilnehmerstation 131, 132 verbunden. In entsprechender Weise ist die zweite PRP-Redbox 202 über ihren ersten und über ihren zweiten Kommunikationsnetzanschluss mittelbar jeweils mit einer WLAN-Basisstation 231, 232 verbunden. Die beiden PRP-Redboxen 102, 202 weisen als dritten Kommunikationsnetzanschluss jeweils einen Interlink-Port auf.

Im vorliegenden Ausführungsbeispiel ist an den Interlink-Port der ersten PRP-Redbox 102 auf Leitsystemebene ein SCADA-System 101 (Supervisory Control and Data Acquisition) angeschlossen. Dagegen ist an den Interlink-Port der zweiten PRP-Redbox 202 auf Feldebene ein Sensor- bzw. Aktorsystem 201 eines industriellen Automatisierungssystems angeschlossen. Dieses Sensor- bzw. Aktorsystem 201 kann beispielsweise ein Fertigungsroboter, ein Antrieb für ein Fördersystem oder eine Bedien- und Beobachtungsstation an einer Fertigungslinie sein.

Die erste 102 und zweite PRP-Redbox 202 weisen jeweils eine mit ihren ersten und zweiten Kommunikationsanschlüssen verbundene Signalverarbeitungseinheit auf, die eine Multiplexereinheit zur parallelen Weiterleitung zu sendender Datenrahmen (Frames) an den jeweiligen ersten und zweiten Kommunikationsnetzanschluss aufweist. Durch eine Multiplexereinheit werden von einem einfach an ein industrielles Kommunikationsnetz angebundenen Kommunikations- bzw. Automatisierungsgerät gesendete Datenrahmen 10 dupliziert. Zueinander redundante Datenrahmen 11, 12 werden durch eine einheitliche Sequenznummer gekennzeichnet, die durch die jeweilige Signalverarbeitungseinheit an redundant zu übermittelnde Datenrahmen vergeben wird. Die zueinander redundanten Datenrahmen 11, 12 werden dann von der jeweiligen PRP-Redbox 102, 202 an eine erste und zweite WLAN-Teilnehmer- bzw. WLAN-Basisstation 131-132, 231-232 weitergeleitet.

Darüber hinaus weisen die erste 102 und zweite PRP-Redbox 202 jeweils eine Redundanzbehandlungseinheit zur Verarbeitung vom jeweiligen ersten und zweiten Kommunikationsnetzanschluss empfangener Datenrahmen auf. Die Redundanzbehandlungseinheit umfasst wiederum eine Filtereinheit, die für eine Detektion und Ausfilterung empfangener redundanter Datenrahmen vorgesehen ist. Des weiteren ist der jeweiligen Signalverarbeitungseinheit jeweils eine Speichereinheit zugeordnet, die Sequenznummern bereits fehlerfrei empfangener Datenrahmen speichert. Bei Empfang eines neuen Datenrahmens führt die Redundanzbehandlungseinheit eine Überprüfung auf Übereinstimmung mit einer bereits gespeicherten Sequenznummer durch. Redundant zu übermittelnde Datenrahmen werden im vorliegenden Ausführungsbeispiel entsprechend Parallel Redundancy Protocol übertragen. Grundsätzlich ist auch eine Übertragung entsprechend High-availability Seamless Redundancy möglich. Nachfolgende Ausführungen gelten hierfür analog.

Die WLAN-Teilnehmerstationen 131, 132 sind dafür konfiguriert, dass sie untereinander Meldungen 100 über verfügbare WLAN-Basisstationen austauschen. Mittels der Meldungen 100 koordinieren die WLAN-Teilnehmerstationen 131, 132, welche der WLAN-Teilnehmerstationen 131, 132 momentan bzw. innerhalb eines definierbaren Zeitraums eine exklusive Berechtigung für eine Funkverbindung zu einer ausgewählten WLAN-Basisstation hat. Die WLAN-Teilnehmerstationen 131, 132 geben in den Meldungen 100 jeweils eine temporäre exklusive Zuordnung einer WLAN-Basisstation 231, 232 zu einer WLAN-Teilnehmerstation 131, 132 an. Darüber hinaus führen die WLAN-Teilnehmerstationen 131, 132 mittels der Meldungen 100 bei einem Abbau oder einer ausbleibenden Nutzung einer Funkverbindung zu einer ausgewählten WLAN-Basisstation 231, 232 eine Freigabe einer zuvor genutzten Funkverbindung zur ausgewählten WLAN-Basisstation 231, 232 durch. Insbesondere vermeiden die WLAN-Teilnehmerstationen 131, 132 mittels der Meldungen 100, dass sich mehrere der ersten PRP-Redbox 102 zugeordnete WLAN-Teilnehmerstationen 131, 132 während eines Roaming-Vorgangs gleichzeitig mit derselben WLAN-Basisstation 231, 232 verbinden.

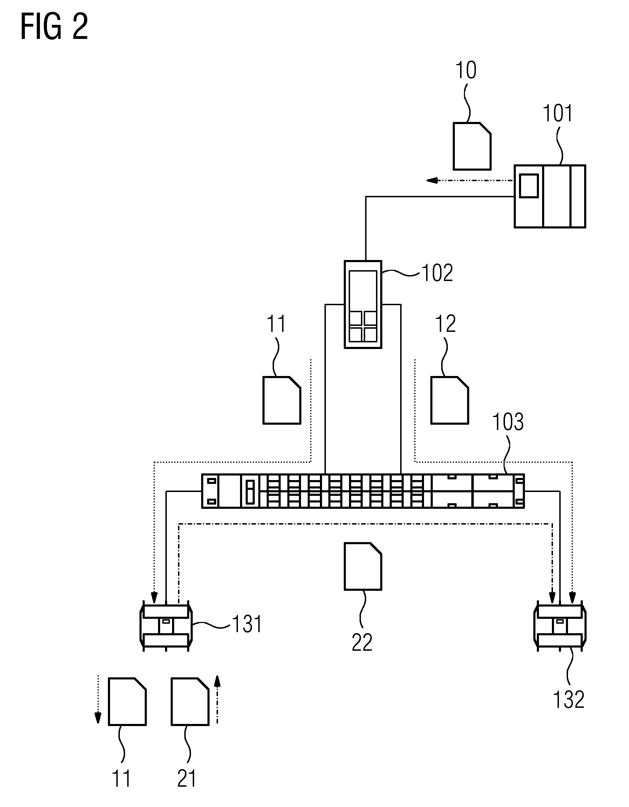

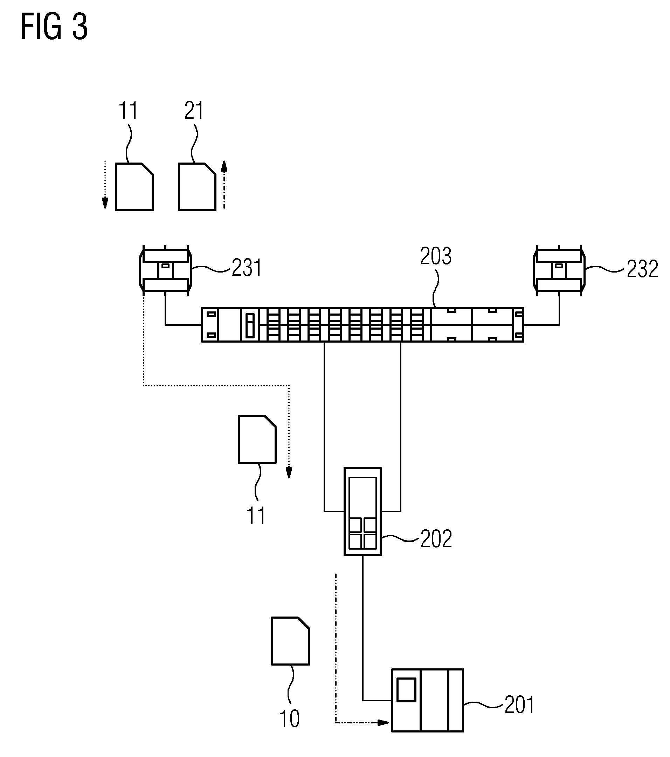

Entsprechend der Detaildarstellung des ersten Teils des industriellen Kommunikationssystems ist die erste PRP-Redbox 102 gemäß Figur 2 über ihren ersten und zweiten Kommunikationsnetzanschluss redundant an einen ersten VLAN-fähigen Switch 103 angeschlossen. In analoger Weise ist die zweite PRP-Redbox 202 entsprechend der Detaildarstellung des zweiten Teils des industriellen Kommunikationssystems gemäß Figur 3 über ihren ersten und zweiten Kommunikationsnetzanschluss redundant an einen zweiten VLAN-fähigen Switch 203 angeschlossen. Der erste 103 und der zweite Switch 203 umfassen jeweils eine Mehrzahl von Kommunikationsnetzanschlüssen und ein die Kommunikationsnetzanschlüsse miteinander verbindendes Koppelelement. Ein solches Koppelelement kann beispielsweise durch einen Hochgeschwindigkeitsbus bzw. einen Backplane Switch mit zugeordnetem Controller realisiert sein.

Vom ersten Kommunikationsnetzanschluss der ersten 102 und der zweiten PRP-Redbox 202 an den jeweiligen Switch 103, 203 übermittelte Datenrahmen werden einem ersten VLAN zugeordnet. Analog dazu werden vom zweiten Kommunikationsnetzanschluss der ersten 102 und der zweiten PRP-Redbox 202 an den jeweiligen Switch 103, 203 übermittelte Datenrahmen einem zweiten VLAN zugeordnet. Dem ersten VLAN zugeordnete Datenrahmen werden mittels der jeweiligen ersten WLAN-Teilnehmer- bzw. WLAN-Basisstation 131, 231 über ein erstes WLAN-Netz mit einer ersten WLAN-SSID gesendet, während dem zweiten VLAN zugeordnete Datenrahmen mittels der jeweiligen zweiten WLAN-Teilnehmer- bzw. WLAN-Basisstation 132, 232 über ein zweites WLAN-Netz mit einer zweiten WLAN-SSID gesendet werden. Dabei sind die erste WLAN-SSID und die zweite WLAN-SSID voneinander verschieden. Grundsätzlich können die ersten 131, 231 und zweiten WLAN-Teilnehmer- bzw. WLAN-Basisstationen 132, 232 für sonstigen Datenverkehr auch dem zweiten bzw. ersten WLAN-Netz zugeordnet sein.

Bei einem erfolgreichen Empfang eines über das erste oder zweite WLAN-Netz gesendeten Datenrahmens übermitteln die WLAN-Teilnehmer- bzw. WLAN-Basisstationen 131-132, 231-232 empfängerseitig eine Acknowledge-Meldung 21 an eine senderseitige WLAN-Teilnehmer- bzw. WLAN-Basisstation 131. Bei Empfang einer Acknowledgement-Meldung 21 übermittelt diese senderseitige WLAN-Teilnehmer- bzw. WLAN-Basisstation 131 eine Drop-Frame-Meldung 22 an ihre zugeordnete Partner-WLAN-Teilnehmer- bzw. -Basisstation 132, die an denselben Switch 103 angeschlossen ist. Auf eine solche Drop-Frame-Meldung 22 unterbindet die jeweilige Partner-WLAN-Teilnehmer- bzw. -Basisstation 132 ein Senden eines redundanten Datenrahmens mit einer Sequenznummer, die einer senderseitig empfangenen Acknowledgement-Meldung 21 zugeordnet ist. Dies kann beispielsweise durch ein Löschen bzw. Verwerfen eines redundanten Datenrahmens aus einer Sende-Queue der Partner-WLAN-Teilnehmer- bzw. -Basisstation erfolgen, insbesondere sobald dieser Datenrahmen nach Übermittlung vom jeweiligen Switch an der Partner-WLAN-Teilnehmer- bzw. -Basisstation eintrifft.

Für einen erhöhten Datendurchsatz hinsichtlich per WLAN übermittelter Datenrahmen werden zu sendende Datenrahmen nach Duplizierung mittels einer PRP-Redbox durch die WLAN-Teilnehmer- bzw. WLAN-Basisstationen vorzugsweise nicht mehr entsprechend FIFO-Prinzip gesendet, sondern in ihrer Sendereihenfolge nach Ziel-MAC-Adressen sortiert. Innerhalb einer Ziel-MAC-Adresse erfolgt dabei eine Beibehaltung einer ursprünglichen Reihenfolge entsprechend Empfangszeitpunkten an der jeweiligen WLAN-Teilnehmer- bzw. WLAN-Basisstation. Vorzugsweise wird darüber hinaus an einander zugeordneten Partner-WLAN-Teilnehmer- bzw. -Basisstationen durch ein koordiniertes Sende-Queue-Management sichergestellt, dass über die beiden Partner-WLAN-Teilnehmer- bzw. -Basisstationen niemals gleichzeitig Datenrahmen an dieselbe Ziel-MAC-Adresse übermittelt werden.

## Patentansprüche

1. Redundant betreibbares industrielles Kommunikationssystem mit
- zumindest einem ersten und einem zweiten redundant an ein industrielles Kommunikationsnetz angebundenen Kommunikationsgerät mit jeweils
- zumindest einem ersten und einem zweiten Kommunikationsnetzanschluss,
- einer mit dem ersten und zweiten Kommunikationsnetzanschluss verbundenen Signalverarbeitungseinheit, die eine Multiplexereinheit zur parallelen Weiterleitung zu sendender Datenrahmen an beide Kommunikationsnetzanschlüsse und eine Redundanzbehandlungseinheit zur Verarbeitung von beiden Kommunikationsnetzanschlüssen empfangener Datenrahmen aufweist, wobei die Redundanzbehandlungseinheit eine Filtereinheit umfasst, die für eine Detektion empfangener redundanter Datenrahmen ausgestaltet und eingerichtet ist,
**dadurch gekennzeichnet, dass**
- das erste Kommunikationsgerät über seinen ersten und über seinen zweiten Kommunikationsnetzanschluss mittel- oder unmittelbar jeweils mit einer Funk-Teilnehmerstation verbunden ist,
- das zweite Kommunikationsgerät über seinen ersten und über seinen zweiten Kommunikationsnetzanschluss mittel- oder unmittelbar jeweils mit einer Funk-Basisstation verbunden ist,
- die Funk-Teilnehmerstationen dafür ausgestaltet und eingerichtet sind, dass sie untereinander Meldungen über verfügbare Funk-Basisstationen austauschen,
- die Funk-Teilnehmerstationen dafür ausgestaltet und eingerichtet sind, dass mittels der Meldungen koordiniert wird, welche der Funk-Teilnehmerstationen momentan und/oder innerhalb eines definierbaren Zeitraums eine exklusive Berechtigung für eine Funkverbindung zu einer ausgewählten Funk-Basisstation hat.

2. Kommunikationssystem nach Anspruch 1,
bei dem die Funk-Teilnehmerstationen dafür ausgestaltet und eingerichtet sind, dass in den Meldungen jeweils eine temporäre exklusive Zuordnung einer Funk-Basisstation zu einer Funk-Teilnehmerstation angegeben wird.

3. Kommunikationssystem nach einem der Ansprüche 1 oder 2,
bei dem die Funk-Teilnehmerstationen dafür ausgestaltet und eingerichtet sind, dass mittels der Meldungen bei einem Abbau oder einer ausbleibenden Nutzung einer Funkverbindung zu einer ausgewählten Funk-Basisstation eine Freigabe einer zuvor genutzten Funkverbindung zur ausgewählten Funk-Basisstation erfolgt.

4. Kommunikationssystem nach einem der Ansprüche 1 bis 3,
bei dem die Funk-Teilnehmerstationen dafür ausgestaltet und eingerichtet sind, dass mittels der Meldungen vermieden wird, dass sich mehrere dem ersten Kommunikationsgerät zugeordnete Funk-Teilnehmerstationen während eines Roaming-Vorgangs gleichzeitig mit derselben Funk-Basisstation verbinden.

5. Kommunikationssystem nach einem der Ansprüche 1 bis 4,
bei dem zueinander redundante Datenrahmen durch eine einheitliche Sequenznummer gekennzeichnet sind, und bei dem die Signalverarbeitungseinheiten des ersten und des zweiten Kommunikationsgeräts für eine Vergabe einer Sequenznummer an einen redundant zu übermittelnden Datenrahmen ausgestaltet und eingerichtet sind.

6. Kommunikationssystem nach Anspruch 5,
bei dem die Funk-Basisstationen dafür ausgestaltet und eingerichtet sind, dass bei einem erfolgreichen Empfang eines über ein Funknetz gesendeten Datenrahmens empfängerseitig eine Bestätigungsmeldung an eine senderseitige Funk-Teilnehmerstation übermittelt wird, und bei dem die Funk-Teilnehmerstationen dafür ausgestaltet und eingerichtet sind, dass ein Senden eines redundanten Datenrahmens mit einer Sequenznummer, die einer senderseitig empfangenen Bestätigungsmeldung zugeordnet ist, unterbunden wird.

7. Kommunikationssystem nach einem der Ansprüche 1 bis 6,
bei dem eine Übertragung redundant zu übermittelnder Datenrahmen entsprechend Parallel Redundancy Protocol erfolgt und bei dem die Funk-Teilnehmerstationen und die Funk-Basisstationen zumindest einem Wireless Local Area Network, einem WiMAX-, einem UMTS-, einem LTE-Mobilfunknetz oder einem sonstigen Mobilfunknetz zugeordnet sind.

8. Kommunikationssystem nach Anspruch 7,
bei dem das erste und zweite Kommunikationsgerät eine PRP-Redbox sind und bei dem über das erste und zweite Kommunikationsgerät jeweils ein einfach angebundenes Kommunikationsgerät mit dem industriellen Kommunikationsnetz verbunden ist.

9. Kommunikationssystem nach einem der Ansprüche 1 bis 8,
bei dem zumindest ein erstes und ein zweites dem industriellen Kommunikationsnetz zugeordnetes Netzinfrastrukturgerät mit jeweils einer Mehrzahl von Kommunikationsnetzanschlüssen und einem die Kommunikationsnetzanschlüsse miteinander verbindenden Koppelelement vorgesehen sind, bei dem das erste Kommunikationsgerät über seinen ersten und zweiten Kommunikationsnetzanschluss redundant an das erste Netzinfrastrukturgerät angeschlossen ist, bei dem das zweite Kommunikationsgerät über seinen ersten und zweiten Kommunikationsnetzanschluss redundant an das zweite Netzinfrastrukturgerät angeschlossen ist, bei dem das erste und zweite Kommunikationsgerät und/oder das erste und zweite Netzinfrastrukturgerät dafür ausgestaltet und eingerichtet sind, dass vom ersten Kommunikationsnetzanschluss des ersten und des zweiten Kommunikationsgeräts an das jeweilige Netzinfrastrukturgerät übermittelte Datenrahmen einem ersten virtuellen lokalen Netz zugeordnet werden und dass vom zweiten Kommunikationsnetzanschluss des ersten und des zweiten Kommunikationsgeräts an das jeweilige Netzinfrastrukturgerät übermittelte Datenrahmen einem zweiten virtuellen lokalen Netz zugeordnet werden, bei dem die Funk-Teilnehmerstationen an das erste Netzinfrastrukturgerät angeschlossen sind, bei dem die Funk-Basisstationen an das zweite Netzinfrastrukturgerät angeschlossen sind und bei dem die Funk-Teilnehmerstationen dafür ausgestaltet und eingerichtet sind, dass dem ersten virtuellen lokalen Netz zugeordnete Datenrahmen mittels der ersten Funk-Teilnehmerstation über ein erstes Funknetz gesendet werden und dass dem zweiten virtuellen lokalen Netz zugeordnete Datenrahmen mittels der zweiten Funk-Teilnehmerstation über ein zweites Funknetz gesendet werden.

10. Verfahren zum redundanten Betrieb eines industriellen Kommunikationssystems, bei dem
- zumindest ein erstes und ein zweites Kommunikationsgerät redundant an ein industrielles Kommunikationsnetz angebunden werden, wobei das erste und zweite Kommunikationsgerät jeweils
- zumindest einen ersten und einen zweiten Kommunikationsnetzanschluss und
- eine mit dem ersten und zweiten Kommunikationsnetzanschluss verbundene Signalverarbeitungseinheit aufweisen, die zu sendende Datenrahmen parallel an beide Kommunikationsnetzanschlüsse weiterleitet und von beiden Kommunikationsnetzanschlüssen empfangene redundante Datenrahmen detektiert,
**dadurch gekennzeichnet, dass**
- das erste Kommunikationsgerät über seinen ersten und über seinen zweiten Kommunikationsnetzanschluss mittel- oder unmittelbar jeweils mit einer Funk-Teilnehmerstation verbunden ist,
- das zweite Kommunikationsgerät über seinen ersten und über seinen zweiten Kommunikationsnetzanschluss mittel- oder unmittelbar jeweils mit einer Funk-Basisstation verbunden ist,
- die Funk-Teilnehmerstationen untereinander Meldungen über verfügbare Funk-Basisstationen austauschen,
- die Funk-Teilnehmerstationen mittels der Meldungen koordinieren, welche der Funk-Teilnehmerstationen momentan und/oder innerhalb eines definierbaren Zeitraums eine exklusive Berechtigung für eine Funkverbindung zu einer ausgewählten Funk-Basisstation hat.

11. Verfahren nach Anspruch 10,
bei dem die Funk-Teilnehmerstationen in den Meldungen jeweils eine temporäre exklusive Zuordnung einer Funk-Basisstation zu einer Funk-Teilnehmerstation angeben.

12. Verfahren nach einem der Ansprüche 10 oder 11,
bei dem die Funk-Teilnehmerstationen mittels der Meldungen
bei einem Abbau oder einer ausbleibenden Nutzung einer Funkverbindung zu einer ausgewählten Funk-Basisstation eine Freigabe einer zuvor genutzten Funkverbindung zur ausgewählten Funk-Basisstation durchführen.

13. Verfahren nach einem der Ansprüche 10 bis 12,
bei dem die Funk-Teilnehmerstationen mittels der Meldungen vermeiden, dass sich mehrere dem ersten Kommunikationsgerät zugeordnete Funk-Teilnehmerstationen während eines Roaming-Vorgangs gleichzeitig mit derselben Funk-Basisstation verbinden.

14. Verfahren nach einem der Ansprüche 10 bis 13,
bei dem zueinander redundante Datenrahmen durch eine einheitliche Sequenznummer gekennzeichnet werden und bei dem die Signalverarbeitungseinheiten des ersten und des zweiten Kommunikationsgeräts eine Sequenznummer an einen redundant zu übermittelnden Datenrahmen vergeben.

15. Verfahren nach Anspruch 14,
bei dem die Funk-Basisstationen bei einem erfolgreichen Empfang eines über ein Funknetz gesendeten Datenrahmens empfängerseitig eine Bestätigungsmeldung an eine senderseitige Funk-Teilnehmerstation übermitteln und bei dem die Funk-Basisstationen ein Senden eines redundanten Datenrahmens mit einer Sequenznummer unterbinden, die einer senderseitig empfangenen Bestätigungsmeldung zugeordnet ist.

16. Verfahren nach einem der Ansprüche 10 bis 15,
bei dem redundant zu übermittelnde Datenrahmen entsprechend Parallel Redundancy Protocol übertragen werden.

17. Verfahren nach einem der Ansprüche 10 bis 16,
bei dem zumindest ein erstes und ein zweites dem industriellen Kommunikationsnetz zugeordnetes Netzinfrastrukturgerät vorgesehen sind, die jeweils eine Mehrzahl von Kommunikationsnetzanschlüssen und ein die Kommunikationsnetzanschlüsse miteinander verbindendes Koppelelement aufweisen, bei dem das erste Kommunikationsgerät über seinen ersten und zweiten Kommunikationsnetzanschluss redundant an das erste Netzinfrastrukturgerät angeschlossen ist, bei dem das zweite Kommunikationsgerät über seinen ersten und zweiten Kommunikationsnetzanschluss redundant an das zweite Netzinfrastrukturgerät angeschlossen ist, bei dem vom ersten Kommunikationsnetzanschluss des ersten und des zweiten Kommunikationsgeräts an das jeweilige Netzinfrastrukturgerät übermittelte Datenrahmen einem ersten virtuellen lokalen Netz und vom zweiten Kommunikationsnetzanschluss des ersten und des zweiten Kommunikationsgeräts an das jeweilige Netzinfrastrukturgerät übermittelte Datenrahmen einem zweiten virtuellen lokalen Netz zugeordnet werden, bei dem die Funk-Teilnehmerstationen an das erste Netzinfrastrukturgerät angeschlossen sind, bei dem die Funk-Basisstationen an das zweite Netzinfrastrukturgerät angeschlossen sind, wobei die erste Funk-Teilnehmerstation dem ersten virtuellen lokalen Netz zugeordnete Datenrahmen über ein erstes Funknetz und die zweite Funk-Teilnehmerstation dem zweiten virtuellen lokalen Netz zugeordnete Datenrahmen über ein zweites Funknetz sendet.

18. Funk-Teilnehmerstation zur Durchführung eines Verfahrens nach einem der Ansprüche 10 bis 17,
wobei die Funk-Teilnehmerstation dafür ausgestaltet und eingerichtet ist, dass sie mit einer weiteren Funk-Teilnehmerstation Meldungen über verfügbare Funk-Basisstationen austauscht und dass mittels der Meldungen koordiniert wird, welche Funk-Teilnehmerstation momentan und/oder innerhalb eines definierbaren Zeitraums eine exklusive Berechtigung für eine Funkverbindung zu einer ausgewählten Funk-Basisstation hat.
